# EUROPEAN PATENT SPECIFICATION

(11) **EP 2 854 378 B1**
(45) Date of publication and mention of the grant of the patent: **01.11.2017**
(21) Application number: 14180252.0
(22) Date of filing: 07.08.2014
(51) Int. Cl.: H04L 29/12

(54) **METHOD, DEVICE AND NETWORK EQUIPMENT FOR ACQUIRING FEATURE INFORMATION**
VERFAHREN, VORRICHTUNG UND NETZWERKGERÄT ZUR ERFASSUNG VON MERKMALSINFORMATIONEN
PROCÉDÉ, DISPOSITIF ET ÉQUIPEMENT DE RÉSEAU POUR L'ACQUISITION D'INFORMATIONS CARACTÉRISTIQUES

(30) Priority: 29.09.2013 CN 201310456266
(43) Date of publication of application: 01.04.2015
(73) Proprietor: Xiaomi Inc., Beijing 100085 (CN)
(72) Inventor: Qu, Heng, Haidian District (CN); Guo, Yu, Haidian District (CN); Yang, Guizhen, Haidian District, (CN); Fan, Jialin, Haidian District, (CN); Yin, Jiajin, Haidian District (CN)
(74) Representative: Hanna Moore + Curley

(56) References cited:
- US-A1- 2004 003 292
- US-A1- 2004 092 231
- US-A1- 2012 131 206

## Description

The present application claims the priority of Chinese patent application No. 201310456266.2, filed on September 29, 2013.

### TECHNICAL FIELD

The present disclosure relates to the field of computer and communication technology, in particular to a method, a device and network equipment for acquiring feature information.

### BACKGROUND

In related technologies, computer networking is ubiquitous following the development in the technologies of communication and the Internet. Information communication has been enhanced. The life of people becomes rich and convenient.

One of the important devices in the Internet is the router, which is a device for the network to connect to a local area network and a wide area network in the Internet. It is the device that in accordance with channel conditions can automatically select and set a route to sequentially send signals depending on a best path. The router is a hub of the Internet, "a traffic cop" . Recently, the router has been applied to all walks of life widely. A variety of different level products have become the main force for implementing the various businesses of internal network connections for a backbone network, connections between backbone networks and Internet connections. Moreover, the router is not only implemented in the public network, but used in every household following an increase in domestic electronic products and an abundance of functionality for surfing the Internet.

A domestic wireless router is normally able to connect a terminal device from nearby networks which strangers not belonging to the family group hold. At this time, the owner may expect the router could filter these unidentified terminal devices. When guests come to the owner's flat and need to use their terminal devices to connect to the wireless router, at this time, the owner will expect the router can enable these devices to access. But the owner is not able to distinguish between the unidentified terminal devices and the terminal devices guests hold.

unidentified terminal devices. When guests come to the owner's flat and need to use their terminal devices to connect to the wireless router, at this time, the owner will expect the router can enable these devices to access. But the owner is not able to distinguish between the unidentified terminal devices and the terminal devices guests hold. US2004/0003292 A1 discloses a user identification device for identifying the user of a user terminal that communicated on the Internet, includes a first communication information acquisition section for acquiring first communication information indicating a correspondence between physical ports and MAC addresses from intelligent hubs, a second communication information acquisition section for acquiring second communication information indicating a correspondence between the MAC addresses and private IP addresses from routers, a third communication information acquisition section for acquiring third communication information indicating a correspondence between the private IP addresses and global IP addresses from routers, and a port detector for detecting a physical port connected to a user terminal that communicated using a designated global IP address.

### SUMMARY

The scope of the invention is defined by the appended claims. The invention concerns a method as in claim 1, a device as in claim 8 and a computer program as in claim 14.

### BRIEF DESCRIPTION OF THE DRAWINGS

The present disclosure will be described in more detail by the drawings illustrated herein. The drawings are follows:
Fig. 1 is a flowchart of a method for acquiring feature information according to an exemplary embodiment of the present disclosure.
Fig. 2 is a flowchart of a method for acquiring feature information using the port according to an exemplary embodiment of the present disclosure.
Fig. 3 is a flowchart of a method for acquiring feature information using the device information according to an exemplary embodiment of the present disclosure.
Fig. 4 is a flowchart of a method for acquiring feature information using the communication according to an exemplary embodiment of the present disclosure.
Fig. 5 is a block diagram of a device for acquiring feature information according to an exemplary embodiment of the present disclosure.
Fig. 6A is a block diagram of a feature module according to the first exemplary embodiment of the present disclosure.
Fig. 6B is a block diagram of a feature module according to the second exemplary embodiment of the present disclosure.
Fig. 7 is a block diagram of a feature module according to the third exemplary embodiment of the present disclosure.
Fig. 8A is a block diagram of a feature module according to the fourth exemplary embodiment of the present disclosure.
Fig. 8B is a block diagram of a feature module according to the fifth exemplary embodiment of the present disclosure.
Fig. 9 is a block diagram of an output module according to an exemplary embodiment of the present disclosure.
Fig. 10 is a block diagram of network equipment according to an exemplary embodiment of the present disclosure.

The embodiments of the present disclosure are illustrated by the drawings above. The present disclosure hereinafter will be described in more detail.

These drawings and descriptions are only for exemplary embodiments and illustrative purposes to illustrate the concepts of the present disclosure for those skilled in the art.

### DESCRIPTION OF THE EMBODIMENTS

In order to clear the objects, technical solutions and advantages of the embodiments of the present disclosure, the embodiments and drawings are incorporated into the detailed description for illustrating the present disclosure hereinafter.

The embodiments of the present disclosure provide a method for acquiring feature information, which will be given detailed descriptions with reference to the accompanying drawings.

The present disclosure can acquire the feature information of the first terminal device using the procedure of network connection, and output the feature information to the users. It can be convenient for users to recognize the first terminal devices connected to the network to implement some processes related to the first terminal device such as the processes enabling or refusing the network connection of the first terminal device.

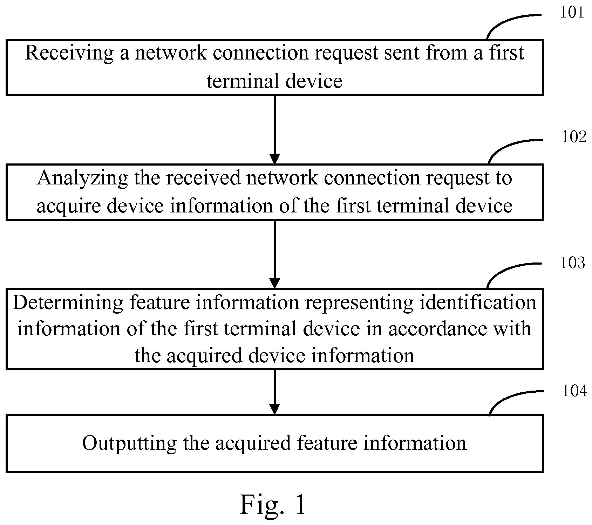

In an embodiment illustrated in Fig. 1, the method for acquiring the feature information includes:

In step 101, receiving a network connection request sent from a first terminal device.

In step 102, analyzing the received network connection request to acquire device information of the first terminal device. The device information can include: MAC address information. The device information may further include the other information which can represent unique identification devices. This information generally cannot be recognized by users; therefore, the feature information which uses can easily recognize may be acquired by the device information.

The medium/media access control (MAC) address, or MAC address and physical address, represents an identifier of each site in the Internet. The MAC address is six bytes of hexadecimal containing 48-bits address space. Wherein, the first three bytes are codes (high order 24 bits) for different vendors, also called organizationally unique identifier, distributed by the Registration Authority (RA) of the Institute of Electrical and Electronics Engineers (IEEE). The last three bytes (low order 24 bits) is an adapter port assigned by each vendor, called extended unique identifier (uniqueness). An address block can be generated 2^24 different addresses. MAC address is an adapter address or an adapter identifier EUI-48.

In step 103, determining the feature information representing identification information of the first terminal device in accordance with the acquired device information. The feature information may include one or more items of user name information, operation system information, brand information, equipment type information, manufacturer information, usage information, and application name information. The feature information may further include the other information related with first terminal devices to allow other users to recognize the user utilizing the first terminal device. It is not listed one by one here.

In step 104, outputting the acquired feature information.

The embodiment can be implemented using the router. In the procedure of the network connection between the first terminal device and the router, the router can acquire the feature information of the first terminal device and output the feature information, to make other users, especially the users who own the router, easily know the terminal devices accessing the network and the users holding the terminal devices. It is convenient for the router owner to make a decision of enabling or refusing the network connection between other terminal devices and the router.

In step 103, there are many of methods for implementing the step of determining the feature information representing identification information of the first terminal device in accordance with the acquired device information. For instance:

Method A1, establishing a network connection with the first terminal device in accordance with the device information; determining a port which the first terminal device accesses; and searching for a corresponding relation between a predetermined port and the feature information to determine the feature information corresponding to the acquired device information in accordance with the port which the first terminal device accesses.

The different operation systems usually include specific applications individually. The operation systems contain these applications (called stationary applications below). Each application generally has fixed access port. The port which the stationary applications usually use is recorded in advance in the present embodiment. Through a corresponding relation between the operation system and the stationary applications, and a corresponding relation between the stationary applications and the port which is often used, a corresponding relation between the port and the operation system can be established. The operation system in the terminal device is fixed. Therefore, the terminal device owning the stationary applications is able to access the stationary port after it achieves the network connection with the router. Thus, the brand information, the equipment type information, and the manufacturer information can be determined by determining the operation system installed in the terminal device using port which the terminal device accesses. For instance, the operation system XI is developed by the company Y1, applied to the smartphone of Z1 brand; therefore, Y1 and Z1 can be determined by X1.

After searching for the corresponding relation between the predetermined port and the feature information to determine the feature information corresponding to the acquired device information in accordance with the port which the first terminal device accesses, final feature information for the first terminal device is distributed in accordance with the determined feature information. In the present disclosure the final feature information may be distributed using the directly acquired feature information. It may result in an ease and accuracy in user's identification compared with the directly acquired feature information.

Method A2, searching for a corresponding relation between a predetermined port and the feature information to determine the feature information corresponding to the acquired device information in accordance with the port which the first terminal device accesses. In this embodiment the corresponding relation can be acquired from channels of manufacturers in advance. Also, an enormous database can be built for the corresponding relations. And then, the implementation of matching the received device information and the device information stored in the database is implemented using the router. When there is a match, the feature information corresponding to the device information that is matched successfully is determined.

Method A3, sending an acquiring request to the first terminal device in accordance with the acquired device information for requesting to acquire the feature information of the first terminal device; receiving a request response sent from the first terminal device, the request response including the feature information of the first terminal device. In this embodiment adopting the method of sending the request to the first terminal device to ask the first terminal device to return the feature information.

Method A4, searching for the feature information corresponding to the device information from a network side. The method can be a channel for widely acquiring the feature information from network.

In step 104, there are many of methods for outputting the acquired feature information. For example, Method B1, displaying the acquired feature information. If the router contains the display, the feature information can be shown directly. Another method B2, for instance, is sending the acquired feature information to a second terminal device. The method can have an increase in the transmission distance of the feature information. The feature information is transmitted to the second terminal device at a remote location.

The various methods of implementing every step in the embodiment shown in Fig. 1 are described above. The embodiments below are shown the details of procedure for the implementation.

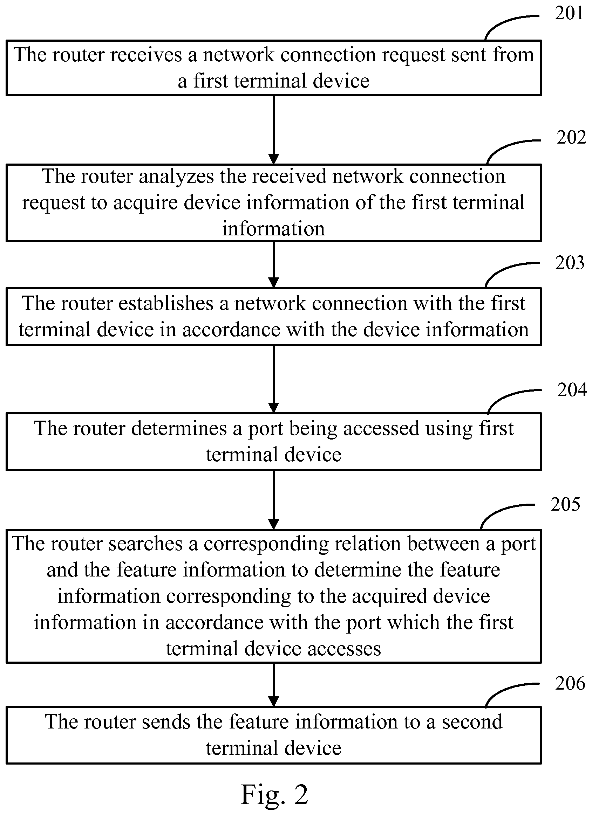

In an embodiment, the disclosure is implemented by a router. As shown in Fig. 2, the method of acquiring the feature information through the port includes:

In step 201, the router receives the request for connecting to the network from the first terminal device. The first terminal device can be a smartphone, a tablet computer, a personal computer, a television, a set-top box, etc. it is not listed one by one.

In step 202, the router acquires the device information of the first terminal device from the received network connection request.

The device information can have a globally unique MAC address.

In step 203, the router establishes the network connection with the first terminal device according to the acquired device information.

In step 204, the router determines the port that is accessed by the first terminal device.

In step 205, the router searches for the corresponding relation between the predetermined port and the feature information to determine the feature information corresponding to the acquired device information in accordance with the port that is accessed by first terminal device.

In step 206, the acquired feature information is sent to the second terminal device.

In the embodiment after the router establishes the network connection with the first terminal device, each port can be scanned and the port which has been accessed by the first terminal device can be recorded. The router determines the feature information of the first terminal device in accordance with the port that is accessed by first terminal device and then sends the feature information to the second terminal device. Wherein the router is configured to have an identification of the second terminal device in advance. In the embodiment, the data quantity of the corresponding relation between the port and the feature information is less. It is easier for establishing the corresponding relation. The searching procedure is faster. Also, the router storage space occupied is smaller.

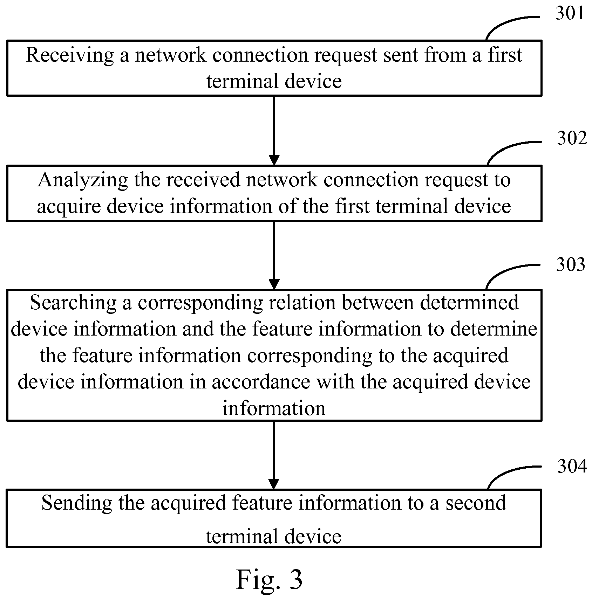

In another embodiment, the disclosure is implemented by a router. As shown in Fig. 3, the method for acquiring the feature information in accordance with the device information may include:

In step 301 it is to receive the network connection request sent from the first terminal device.

In step 302 it is to analyze the received network connection request to acquire device information of the first terminal device.

In step 303 it is to determine the feature information representing identification information of the first terminal device in accordance with the acquired device information.

In step 304 it is to send the acquired feature information to the second terminal device.

In the embodiment the corresponding relation between the device information and feature information is established using the variety of channels in advance. The feature information may include: user name information, operation system information, brand information, equipment type information, manufacturer information, usage information, and application name information. For instance, the user name information is XX-IOS6. XX is a short name of the user who holds the first terminal. The IOS6 is the operation system information. The user name information is the user name registered to the first terminal device by the user. The operation system information is for example IOS6. The brand information, for example, is Apple, Samsung, etc. The equipment type information, for example, is I9500, etc. The manufacturer information, for example, is Apple, Samsung, etc. The manufacturer information can be the same as the brand information. The usage information, for example, is the smartphone and tablet computer, etc. The usage information can be included in the equipment type information. The application name information, for example, is the name information of the stationary application corresponding to the accessed port.

In the embodiment the corresponding relation between the device information and feature information has the greater data quantity, more comprehensive and accurate in comparison with the embodiment of the corresponding relation between the device information and feature information shown in Fig. 2.

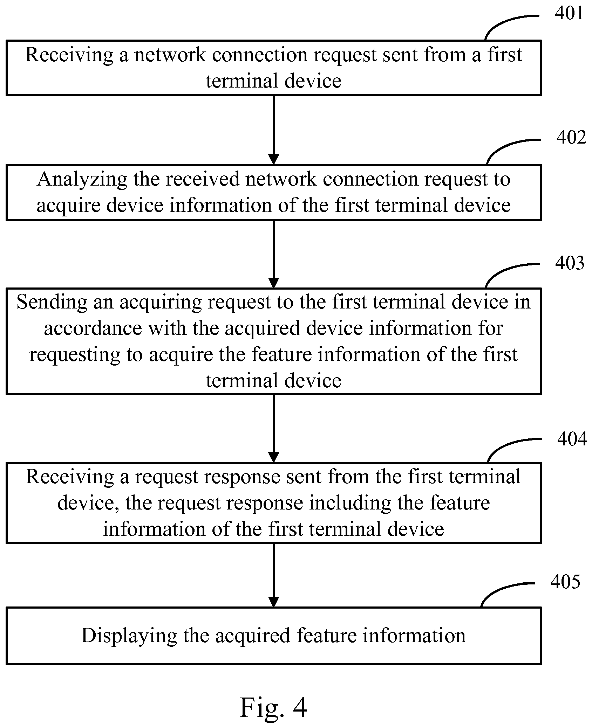

In another embodiment, the disclosure is implemented by a router. As shown in Fig. 4, the method for acquiring the feature information in accordance with the communication may include:

In step 401 it is to receive the network connection request sent from the first terminal device.

In step 402 it is to analyze the received network connection request to acquire device information of the first terminal device.

In step 403 it is to send the acquiring request to the first terminal device for requesting to acquire the feature information of the first terminal device in accordance the acquired device information.

In step 404 it is to receive the request response sent from the first terminal device. The request response includes the feature information of the first terminal device.

In step 405 it is to display the acquired feature information.

In the embodiment the router actively sends the acquiring request to the first terminal device to request for acquiring the feature information of the first information device. The request response in the first terminal device carries the feature information. The method does not need to establish the corresponding relation in advance compared with the embodiments shown in the Fig. 2 and Fig. 3. It can save the storage space and simplify the searching procedure. Also, the acquired feature information is more accurate. The feature information includes: user name information, operation system information, brand information, equipment type information, manufacturer information, usage information, and application name information. In addition, the acquiring request can further include the information types for requesting to acquire one or more types of information in the feature information. The request response in the first terminal device carries the corresponding feature information according to the information type. For instance, if the information type in the acquiring request represents the user name information, the request response in the first terminal device carries the user name information.

The procedure of acquiring the feature information can be understood according to the description above. The procedure can be implemented by the device. The internal configuration and function of the device is described as follows.

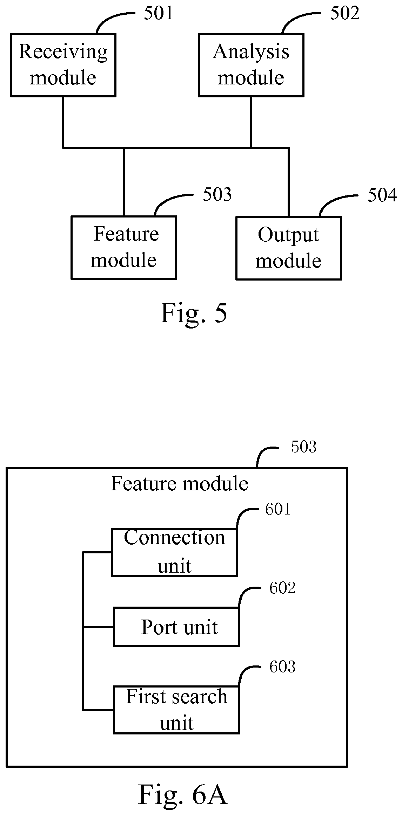

In an embodiment, as shown in Fig. 5, the device for acquiring the feature information may include: a receiving module 501, an analysis module 502, a feature module 503, and an output module 504.

The receiving module 501 is configured to receive the network connection request sent from the first terminal device.

The analysis module 502 is configured to analyze the received network connection request to acquire device information of the first terminal information. The device information may include: the media access control (MAC) address information and / or the port usage information.

The feature module 503 is configured to determine the feature information representing the identification information of the first terminal device in accordance with the acquired device information. The feature information may include: one or more items of user name information, operation system information, brand information, equipment type information, manufacturer information, usage information, and application name information.

The output module 504 is configured to output the acquired feature information.

In another embodiment, referring to Fig. 6A, the feature module 503 may include: a connection unit 601, port unit 602, and a first search unit 603.

The connection unit 601 is configured to establish the network connection with the first terminal device in accordance with the device information.

The port unit 602 is configured to determine the port which the first terminal device accesses.

The first search unit 603 is configured to search for the corresponding relation between the predetermined port and the feature information to determine the feature information corresponding to the acquired device information in accordance with the port which the first terminal device accesses.

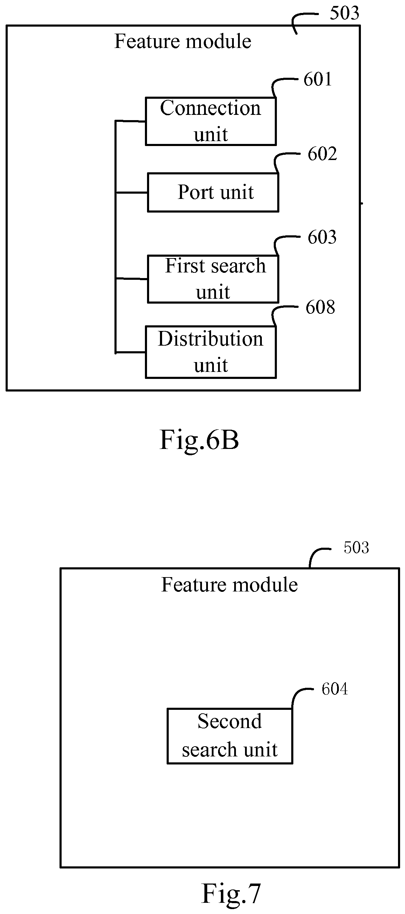

In another embodiment, as shown in Fig. 6B, the feature module 503 may include: a distribution unit 608 is configured to distribute the final feature information of the first terminal device in accordance with the determined feature information.

In another embodiment, as shown in Fig. 7, the feature module 503 may include: a second search unit 604.

The second search unit 604 is configured to search for the corresponding relation between predetermined device information and the feature information to determine the feature information corresponding to the acquired device information in accordance with the acquired device information.

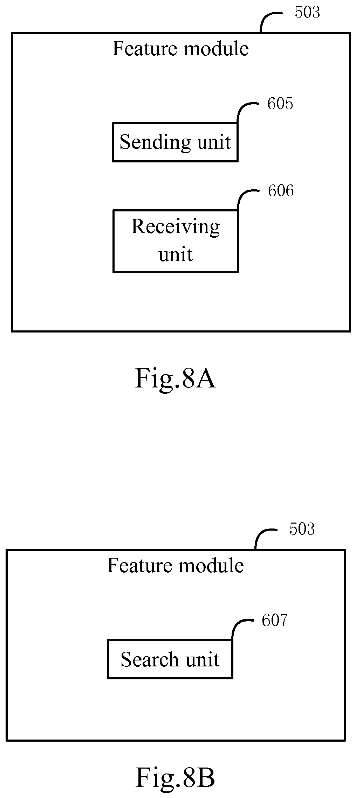

In another embodiment, as shown Fig. 8A, the feature module 503 may include: a sending unit 605 and a receiving unit 606.

The sending unit 605 is configured to send the acquiring request to the first terminal device in accordance with the acquired device information for requesting to acquire the feature information of the first terminal device.

The receiving unit 606 is configured to receive the request response sent from the first terminal device. The request response may include the feature information of the first terminal device.

In another embodiment, as shown Fig. 8B, the feature module 503 may include: a search unit 607 is configured to search for the feature information corresponding to the device information from the network side.

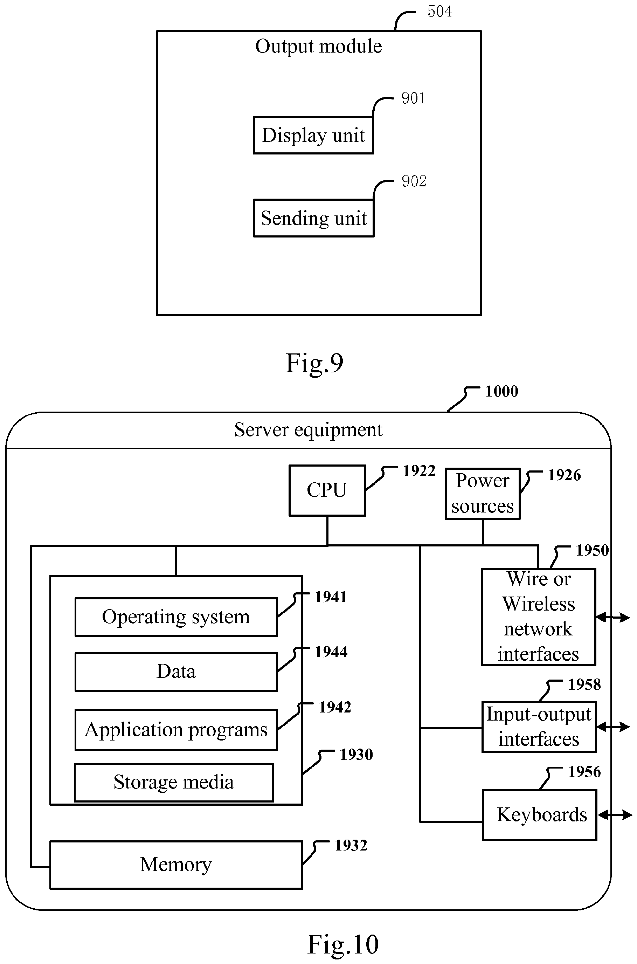

In another embodiment, as shown Fig. 9, the output module 504 may include: a display unit 901 or a sending unit 902.

The display unit 901 is configured to display the acquired feature information. The sending unit 902 is configured to send the acquired feature information to the second terminal device.

Fig. 10 is a block diagram illustrating network equipment according to an embodiment of the present disclosure. The network equipment 1000 may be relatively large with different configuration or properties, and may include one or more CPU (central processing unit) 1922 (e.g., one or more processors) and a memory 1932, one or more storage media 1930 storing application programs 1942 or data 1944 (e.g., one or more mass storage devices). Wherein, the memory 1932 and the storage media 1930 may store temporarily or permanently. The program stored in storage media 1930 may include one or more modules (not shown in this drawing), each module may include a series of instructions for operating the network equipment. Further, the CPU 1922 may be configured to communicate with the storage media 1930, a series of instructions of the storage media 1930 are executed on the server 1900.

The network equipment 1000 may also include one or more power sources 1926, one or more wired or wireless network interfaces 1950 , one or more input-output interfaces 1958, one or more keyboards 1956, and/or one or more operating systems 1941 such as Windows ServerTM, Mac OS XTM, UnixTM, LinuxTM, FreeBSDTM and the like.

The network equipment 1000, which may be a router as the network equipment, may include a memory and one or more programs stored in the memory, wherein the one or more programs are configured to be executed by one or more processors, and include instructions of performing the following operations: receiving a network connection request sent from a first terminal device; analyzing the received network connection request to acquire device information of the first terminal device; and outputting the acquired feature information.

The memory may further include the instructions for performing the following operations. The determining the feature information representing the identification information of the first terminal device in accordance with the acquired device information may include: establishing the network connection with the first terminal device in accordance with the device information; determining the port which the first terminal device accesses; and searching for the corresponding relation between the predetermined port and the feature information to determine the feature information corresponding to the acquired device information in accordance with the port which the first terminal device accesses.

The memory may further include instructions of performing the following operations: the determining the feature information representing the identification information of the first terminal device in accordance with the acquired device information may include: after searching for the corresponding relation between the predetermined port and the feature information to determine the feature information corresponding to the acquired device information in accordance with the port which the first terminal device accesses, the final feature information for the first terminal device is distributed in accordance with the determined feature information

The memory may further include instructions of performing the following operations: the determining the feature information representing the identification information of the first terminal device in accordance with the acquired device information may include: searching for the corresponding relation between the predetermined device information and the feature information to determine the feature information corresponding to the acquired device information in accordance with the acquired device information.

The memory may further include instructions of performing the following operations: the determining the feature information representing the identification information of the first terminal device in accordance with the acquired device information may include: sending the acquiring request to the first terminal device in accordance with the acquired device information for requesting to acquire the feature information of the first terminal device; receiving the request response sent from the first terminal device, the request response including the feature information of the first terminal device; or searching for the feature information corresponding to the device information from the network side.

The memory may further include instructions of performing the following operations: the outputting the acquired feature information may include: displaying the acquired feature information; or sending the acquired feature information to the second terminal device.

The memory may further include instructions of performing the following operations: the device information may include: the media access control (MAC) address information and / or the port usage information.

The memory may further include instructions of performing the following operations: the feature information comprises: one or more items of user name information, operation system information, brand information, equipment type information, manufacturer information, usage information, and application name information.

The embodiment of the present disclosure can acquire the feature information of the first terminal device using the procedure of network connection, and output the feature information to the users. It can be convenient for users to recognize the first terminal devices connected to the network to implement some processes related to the first terminal device. For instance, the process of permitting or refusing the first terminal device to connect with the network can be made. The present disclosure provides the variety of methods of acquiring and outputting the feature information. They can be applied to various circumstances depending on actual needs.

In addition, typically the mobile terminal described in the present disclosure may be various handheld mobile terminals such as smartphone and personal digital assistant (PDA), etc. Therefore, the present disclosure is not to be limited to a certain type of mobile terminal.

In addition, the method according to the present disclosure may further be implemented by a CPU executable computer program. When the computer program is executed by the CPU, the above functions defined in the method of the present disclosure are executed.

In addition, the above steps in the method and the units in the system may be implemented by a controller and a computer readable storage device configured to store the computer programs for the controller to achieve the functions of the above steps or units.

In addition, it should be understood that, the computer readable storage device (for example, a memory) described by the present disclosure may be a volatile memory or a nonvolatile memory, or may include both of the volatile memory and the nonvolatile memory. As an example without limitation, the nonvolatile memory may include a read-only memory (ROM), a programmable ROM (PROM), an electrically programmable read-only memory ROM (EPROM), an electrically erasable programmable ROM (EEPROM) or a flash memory. The volatile memory may include a random access memory (RAM), which may function as an external cache memory. As an example without limitation, the RAM may be obtained in various kinds such as a synchronous RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a directly Rambus RAM (DRRAM). The storage device in the disclosed aspect is intended to include but not to be limited by those and other proper types of memories.

It should be understood by those skilled in the art that, the various exemplary logic blocks, modules, circuits and algorithm steps described in conjunction with the disclosure herein may be implemented by electronic hardware, computer software or the combination of both. In order to clearly explain the interchangeability of the hardware and the software, it has been generally illustrated with respect to the functions of the various exemplary members, blocks, modules, circuits and steps. Whether such functions are implemented by software or hardware depends on the specific application and the design restriction applied to the whole system.

By using the following components designed to execute the functions described herein, the various exemplary logic blocks, modules and circuits described in conjunction with the disclosure herein may carry out or execute: a general-purpose processor, a digital signal processor (DSP), a specific integrated circuit (ASIC), a field programmable gate array (FPGA) or other programmable logic devices, a discrete gate or transistor logic, a discrete hardware assemble or any combination of those components. The general-purpose processor may be a microprocessor. However, alternatively, the processor may be any of traditional processors, controllers, microcontrollers or state machines. The processor may also be implemented by a combination of the computing devices such as a combination of a DSP and a microprocessor, a plurality of microprocessors, one or more microprocessors in conjunction with DSP core, or any other those kind of configurations.

The method or algorithm steps described in conjunction with the disclosure herein may be directly included in the hardware, in the software modules executed by the processor or in the combination of both. The software modules may host in a RAM memory, a flash memory, a ROM memory, an EPROM memory, an EEPROM memory, a register, a hard disc, a movable disc, a CD-ROM, or any of other kind of storage medium known in the art. The exemplary storage media are coupled to the processor, so that the processor can read/write information from/to the storage media. In an alternative aspect, the storage media may be integrated with the processor. The processor and the storage media may host in an ASIC. The ASIC may host in a user terminal. In an alternative aspect, the processor and the storage media may host in a user terminal as a discrete assembly.

In one or more exemplary designs, the function may be implemented in hardware, software, firmware or any combinations thereof. If it is implemented in software, the function may be stored in the computer readable media or transferred via the computer readable media as one or more instructions or codes. The computer readable media may include a computer storage medium and a communication medium, wherein the communication medium may include any medium which is helpful for transferring the computer program from one site to another site. The storage media may be any usable medium accessible by a general or dedicated computer. As an example without limitation, the computer readable media may include RAM, ROM, EEPROM, CD-ROM or other CD storage devices, disc storage devices or other magnetic storage devices, or may be any other media for carrying or storing the required program code in form of instructions or data structure accessible by a general or dedicated computer or a general or dedicated processor. In addition, any kind of connection may be properly referred as a computer readable medium. For example, if software is sent from a website, a server or other distant sources with a coaxial cable, an optical fiber cable, a twisted-pair, or a digital user line (DSL), or with the wireless technology such as infrared, radio wave or microwave, those above coaxial cable, optical fiber cable, twisted-pair, DSL or the wireless technology such as infrared, radio wave and microwave are all included in the definition of media. As used herein, the magnetic disk and optical disk may include a compact disk (CD), a laser disk, an optical disk, a digital versatile disk (DVD), a floppy disk or a blue-ray disk, wherein the magnetic disk usually represents data magnetically, and the optical disk usually represents data optically by using a laser. The combination of the above components may also be included within the meaning of computer readable media.

According to the functions of the method claims in the disclosed embodiments described herein, steps and/or actions are not executed in any specific sequence. In addition, although the element in the present disclosure may be described or required individually, it may be conceived as plural, unless being clearly defined as single.

The objects, technical solutions, and advantageous effects have been given with reference to the above embodiments. It should be understood the above description are only certain embodiments of the present disclosure, which are not intended to limit the present disclosure.

## Claims

1. A method implemented by a router, the method comprising:
receiving (101) a network connection request sent from a first terminal device;
analyzing (102) the received network connection request to acquire unique device information of the first terminal device;
determining (103) feature information representing user-recognizable identification information of the first terminal device in accordance with the acquired unique device information, to allow a user of the router to recognize the first terminal device and enable or refuse network connection of the first terminal device to the router based on the feature information; and
outputting (104) the feature information, comprising displaying the feature information to notify users that there is a network connection with the first terminal device, or sending the feature information to other terminal devices to notify other terminal devices that there is a network connection with the first terminal device;
wherein the user-recognizable feature information comprises: one or more items of user name information, operating system information, brand information, equipment type information, manufacturer information, usage information, and application name information.

2. The method according to claim 1, wherein determining (103) feature information representing user-recognizable identification information of the first terminal device in accordance with the acquired unique device information comprises:
searching (303) for a corresponding relation between predetermined device information and the feature information to determine the feature information corresponding to the acquired device information in accordance with the acquired device information.

3. The method according to claim 1, wherein determining (103) feature information representing user-recognizable identification information of the first terminal device in accordance with the acquired unique device information comprises:
establishing (203) a network connection with the first terminal device in accordance with the device information;
determining (204) a port which the first terminal device accesses; and
searching (205) for a corresponding relation between a predetermined port and the feature information to determine the feature information corresponding to the acquired device information in accordance with the port which the first terminal device accesses.

4. The method according to claim 3, wherein determining (103) feature information representing user-recognizable identification information of the first terminal device in accordance with the unique acquired device information comprises:
after searching (205) for a corresponding relation between the predetermined port and the feature information to determine the feature information corresponding to the acquired device information in accordance with the port which the first terminal device accesses, distributing (206) final feature information for the first terminal device in accordance with the determined feature information.

5. The method according to claim 1, wherein determining (103) feature information representing user-recognizable identification information of the first terminal device in accordance with the acquired unique device information comprises:
sending (403) an acquiring request to the first terminal device in accordance with the acquired device information for requesting to acquire the feature information of the first terminal device; receiving (404) a request response sent from the first terminal device, the request response including the feature information of the first terminal device; or
searching for the feature information corresponding to the device information from a network side.

6. The method according to claim 1, wherein outputting (104) the feature information comprises:
displaying (405) the feature information;
or sending (304) the feature information to a second terminal device.

7. The method according to claim 1, wherein the device information comprises: media access control (MAC) address information and/or port usage information.

8. A device for acquiring feature information, **characterized in that** the device comprises:
a receiving module (501) configured to receive a network connection request sent from a first terminal device;
an analysis module (502) configured to analyze the received network connection request to acquire unique device information of the first terminal information;
a feature module (503) configured to determine feature information representing user-recognizable identification information of the first terminal device in accordance with the acquired unique device information, to allow a user of the device to recognize the first terminal device and enable or refuse network connection of the first terminal device to the router based on the acquired feature information; and
an output module (504) configured to output the feature information, comprising displaying the feature information to notify users that there is a network connection with the first terminal device, or sending the feature information to other terminal devices to notify other terminal devices that there is a network connection with the first terminal device;
wherein the user-recognizable feature information comprises: one or more items of user name information, operating system information, brand information, equipment type information, manufacturer information, usage information, and application name information.

9. The device according to claim 8, wherein the feature module (503) comprises:
a connection unit (601) configured to establish a network connection with the first terminal device in accordance with the unique device information;
a port unit (602) configured to determine a port which the first terminal device accesses; and
a first search unit (603) configured to search for a corresponding relation between a predetermined port and the feature information to determine the user-recognizable feature information corresponding to the acquired unique device information in accordance with the port which the first terminal device accesses.

10. The device according to claim 9, wherein the feature module (503) further comprises:
a distribution unit (608) configured to distribute final feature information for the first terminal device in accordance with the determined feature information.

11. The device according to claim 8, wherein the feature module (503) comprises:
a second search unit (604) configured to search for a corresponding relation between predetermined device information and the feature information to determine the user-recognizable feature information corresponding to the acquired unique device information in accordance with the acquired device information.

12. The device according to claim 8, wherein the feature module (503) comprises:
a sending unit (605) configured to send an acquiring request to the first terminal device in accordance with the acquired unique device information for requesting to acquire the user-recognizable feature information of the first terminal device;
a receiving unit (606) configured to receive a request response sent from the first terminal device, the request response including the feature information of the first terminal device; or
the feature module (503) comprises:
a search unit (607) configured to search for the feature information corresponding to the device information from a network side.

13. The device according to claim 8, wherein the output module (504) comprises:
a display unit (901) configured to display the feature information, to notify users that there is a network connection with the first terminal device; or
a sending unit (902) configured to send the feature information to a second terminal device, to notify other terminal devices that there is a network connection with the first terminal device.

14. A computer program, which when executing on a processor, performs the method according to any one of claims 1 to 7.

## Patentansprüche

1. Verfahren, implementiert durch einen Router, wobei das Verfahren Folgendes beinhaltet:
Empfangen (101) einer von einem ersten Endgerät gesendeten Netzwerkverbindungsanforderung;
Analysieren (102) der empfangenen Netzwerkverbindungsanforderung zum Erfassen von eindeutigen Geräteinformationen des ersten Endgeräts;
Feststellen (103) von Merkmalsinformationen, die für den Benutzer erkennbare Identifikationsinformationen des ersten Endgeräts gemäß den erfassten eindeutigen Geräteinformationen repräsentieren, um es einem Benutzer des Routers zu ermöglichen, das erste Endgerät zu erkennen und eine Netzwerkverbindung des ersten Endgeräts mit dem Router auf der Basis der Merkmalsinformationen zu ermöglichen oder zu verweigern; und
Ausgeben (104) der Merkmalsinformationen, das das Anzeigen der Merkmalsinformationen, um Benutzer zu benachrichtigen, dass es eine Netzwerkverbindung mit dem ersten Endgerät gibt, oder das Senden der Merkmalsinformationen zu anderen Endgeräten beinhaltet, um andere Endgeräte zu benachrichtigen, dass es eine Netzwerkverbindung mit dem ersten Endgerät gibt;
wobei die für den Benutzer erkennbaren Merkmalsinformationen Folgendes umfassen: ein oder mehrere Elemente von Benutzernamensinformationen, Betriebssysteminformatonen, Markeninformationen, Gerätetypinformationen, Herstellerinformationen, Gebrauchsinformationen und Anwendungsnamensinformationen.

2. Verfahren nach Anspruch 1, wobei das Feststellen (103) von Merkmalsinformationen, die für den Benutzer erkennbare Identifikationsinformationen des ersten Endgeräts repräsentieren, gemäß den erfassten eindeutigen Geräteinformationen Folgendes beinhaltet:
Suchen (303) nach einer entsprechenden Beziehung zwischen vorbestimmten Geräteinformationen und den Merkmalsinformationen zum Feststellen der Merkmalsinformationen entsprechend den erfassten Geräteinformationen gemäß den erfassten Geräteinformationen.

3. Verfahren nach Anspruch 1, wobei das Feststellen (103) von Merkmalsinformationen, die für den Benutzer erkennbare Identifikationsinformationen des ersten Endgeräts repräsentieren, gemäß den erfassten eindeutigen Geräteinformationen Folgendes beinhaltet:
Herstellen (203) einer Netzwerkverbindung mit dem ersten Endgerät gemäß den Geräteinformationen;
Bestimmen (204) eines Ports, auf den das erste Endgerät zugreift; und
Suchen (205) nach einer entsprechenden Beziehung zwischen einem vorbestimmten Port und den Merkmalsinformationen, um die Merkmalsinformationen festzustellen, die den erfassten Geräteinformationen entsprechen, gemäß dem Port, auf den das erste Endgerät zugreift.

4. Verfahren nach Anspruch 3, wobei das Feststellen (103) von Merkmalsinformationen, die für den Benutzer erkennbare Identifikationsinformationen des ersten Endgeräts repräsentieren, gemäß den eindeutigen erfassten Geräteinformationen Folgendes beinhaltet:
Verteilen (206), nach dem Suchen (205) nach einer entsprechenden Beziehung zwischen dem vorbestimmten Port und den Merkmalsinformationen zum Feststellen der Merkmalsinformationen, die den erfassten Geräteinformationen entsprechen, gemäß dem Port, auf den das erste Endgerät zugreift, von endgültigen Merkmalsinformationen für das erste Endgerät gemäß den festgestellten Merkmalsinformationen.

5. Verfahren nach Anspruch 1, wobei das Feststellen (103) von Merkmalsinformationen, die für den Benutzer erkennbare Identifikationsinformationen des ersten Endgeräts repräsentieren, gemäß den erfassten eindeutigen Geräteinformationen Folgendes beinhaltet:
Senden (403) einer Erfassungsanforderung an das erste Endgerät gemäß den erfassten Geräteinformationen zum Anfordern der Erfassung der Merkmalsinformationen des ersten Endgeräts; Empfangen (404) einer vom ersten Endgerät gesendeten Anforderungsantwort, wobei die Anforderungsantwort die Merkmalsinformationen des ersten Endgeräts beinhaltet; oder
Suchen nach den Merkmalsinformationen entsprechend den Geräteinformationen von einer Netzwerkseite.

6. Verfahren nach Anspruch 1, wobei das Ausgeben (104) der Merkmalsinformationen Folgendes beinhaltet:
Anzeigen (405) der Merkmalsinformationen;
oder Senden (304) der Merkmalsinformationen zu einem zweiten Endgerät.

7. Verfahren nach Anspruch 1, wobei die Geräteinformationen Folgendes umfassen: MAC-(Media Access Control)-Adressinformationen und/oder Portgebrauchsinformationen.

8. Gerät zum Erfassen von Merkmalsinformationen, **dadurch gekennzeichnet, dass** das Gerät Folgendes umfasst:
ein Empfangsmodul (501), konfiguriert zum Empfangen einer von einem ersten Endgerät gesendeten Netzwerkverbindungsanforderung;
ein Analysemodul (502), konfiguriert zum Analysieren der empfangenen Netzwerkverbindungsanforderung zum Erfassen von eindeutigen Geräteinformationen der ersten Endgeräteinformationen;
ein Merkmalsmodul (503), konfiguriert zum Feststellen von Merkmalsinformationen, die für den Benutzer erkennbare Identifikationsinformationen des ersten Endgeräts repräsentieren, gemäß den erfassten eindeutigen Geräteinformationen, um es einem Benutzer des Gerätes zu ermöglichen, das erste Endgerät zu erkennen und eine Netzwerkverbindung des ersten Endgeräts mit dem Router auf der Basis der erfassten Merkmalsinformationen zu ermöglichen oder zu verweigern; und
ein Ausgabemodul (504), konfiguriert zum Ausgeben der Merkmalsinformationen, das das Anzeigen der Merkmalsinformationen, um Benutzer zu benachrichtigen, dass es eine Netzwerkverbindung mit dem ersten Endgerät gibt, oder das Senden der Merkmalsinformationen zu anderen Endgeräten beinhaltet, um andere Endgeräte zu benachrichtigen, dass es eine Netzwerkverbindung mit dem ersten Endgerät gibt;
wobei die für den Benutzer erkennbaren Merkmalsinformationen Folgendes umfassen: ein oder mehrere Elemente von Benutzernamensinformationen, Betriebssysteminformationen, Markeninformationen, Gerätetypinformationen, Herstellungsinformationen, Gebrauchsinformationen und Anwendungsnamensinformationen.

9. Gerät nach Anspruch 8, wobei das Merkmalsmodul (503) Folgendes umfasst:
eine Verbindungseinheit (601), konfiguriert zum Herstellen einer Netzwerkverbindung mit dem ersten Endgerät gemäß den eindeutigen Geräteinformationen;
eine Porteinheit (602), konfiguriert zum Bestimmen eines Ports, auf den das erste Endgerät zugreift; und
eine erste Sucheinheit (603), konfiguriert zum Suchen nach einer entsprechenden Beziehung zwischen einem vorbestimmten Port und den Merkmalsinformationen zum Feststellen der für den Benutzer erkennbaren Merkmalsinformationen entsprechend den erfassten eindeutigen Geräteinformationen, gemäß dem Port, auf den das erste Endgerät zugreift.

10. Gerät nach Anspruch 9, wobei das Merkmalsmodul (503) ferner Folgendes umfasst:
eine Verteilungseinheit (608), konfiguriert zum Verteilen von endgültigen Merkmalsinformationen für das erste Endgerät gemäß den festgestellten Merkmalsinformationen.

11. Gerät nach Anspruch 8, wobei das Merkmalsmodul (503) Folgendes umfasst:
eine zweite Sucheinheit (604), konfiguriert zum Suchen nach einer entsprechenden Beziehung zwischen vorbestimmten Geräteinformationen und den Merkmalsinformationen zum Feststellen der für den Benutzer erkennbaren Merkmalsinformationen entsprechend den erfassten eindeutigen Geräteinformationen, gemäß den erfassten Geräteinformationen.

12. Gerät nach Anspruch 8, wobei das Merkmalsmodul (503) Folgendes umfasst:
eine Sendeeinheit (605), konfiguriert zum Senden einer Erfassungsanforderung an das erste Endgerät gemäß den erfassten eindeutigen Geräteinformationen zum Anfordern der Erfassung der für den Benutzer erkennbaren Merkmalsinformationen des ersten Endgeräts;
eine Empfangseinheit (606), konfiguriert zum Empfangen einer vom ersten Endgerät gesendeten Anforderungsantwort, wobei die Anforderungsantwort die Merkmalsinformationen des ersten Endgeräts beinhaltet; oder
das Merkmalsmodul (503) Folgendes umfasst:
eine Sucheinheit (607), konfiguriert zum Suchen nach den Merkmalsinformationen entsprechend den Geräteinformationen von einer Netzwerkseite.

13. Gerät nach Anspruch 8, wobei das Ausgabemodul (504) Folgendes umfasst:
eine Anzeigeeinheit (901), konfiguriert zum Anzeigen der Merkmalsinformationen, um Benutzer zu benachrichtigen, dass es eine Netzwerkverbindung mit dem ersten Endgerät gibt; oder
eine Sendeeinheit (902), konfiguriert zum Senden der Merkmalsinformationen zu einem zweiten Endgerät, um andere Endgeräte zu benachrichtigen, dass es eine Netzwerkverbindung mit dem ersten Endgerät gibt.

14. Computerprogramm, das bei Abarbeitung auf einem Prozessor das Verfahren nach einem der Ansprüche 1 bis 7 ausführt.

## Revendications

1. Un procédé mis en oeuvre par un routeur, le procédé comprenant :
la réception (101) d'une demande de connexion à un réseau envoyée à partir d'un premier dispositif terminal,
l'analyse (102) de la demande de connexion à un réseau reçue de façon à acquérir des informations de dispositif uniques du premier dispositif terminal,
la détermination (103) d'informations de caractéristiques représentant des informations d'identification reconnaissables par un utilisateur du premier dispositif terminal en fonction des informations de dispositif uniques acquises, de façon à permettre à un utilisateur du routeur de reconnaître le premier dispositif terminal et d'autoriser ou de refuser une connexion réseau du premier dispositif terminal au routeur en fonction des informations de caractéristiques, et
la production en sortie (104) des informations de caractéristiques, comprenant l'affichage des informations de caractéristiques de façon à notifier des utilisateurs qu'il existe une connexion réseau avec le premier dispositif terminal, ou l'envoi des informations de caractéristiques vers d'autres dispositifs terminaux de façon à notifier d'autres dispositifs terminaux qu'il existe une connexion réseau avec le premier dispositif terminal,
où les informations de caractéristiques reconnaissables par un utilisateur comprennent : un ou plusieurs éléments parmi informations de nom d'utilisateur, informations de système d'exploitation, informations de marque, informations de type d'équipement, informations de fabricant, informations d'utilisation et informations de nom d'application.

2. Le procédé selon la Revendication 1, où la détermination (103) d'informations de caractéristiques représentant des informations d'identification reconnaissables par un utilisateur du premier dispositif terminal en fonction des informations de dispositif uniques acquises comprend :
la recherche (303) d'une relation correspondante entre des informations de dispositif prédéterminées et les informations de caractéristiques de façon à déterminer les informations de caractéristiques correspondant aux informations de dispositif acquises en fonction des informations de dispositif acquises.

3. Le procédé selon la Revendication 1, où la détermination (103) d'informations de caractéristiques représentant des informations d'identification reconnaissables par un utilisateur du premier dispositif terminal en fonction des informations de dispositif uniques acquises comprend :
l'établissement (203) d'une connexion réseau avec le premier dispositif terminal en fonction des informations de dispositif,
la détermination (204) d'un port auquel le premier dispositif terminal accède, et
la recherche (205) d'une relation correspondante entre un port prédéterminé et les informations de caractéristiques de façon à déterminer les informations de caractéristiques correspondant aux informations de dispositif acquises en fonction du port auquel le premier dispositif terminal accède.

4. Le procédé selon la Revendication 3, où la détermination (103) d'informations de caractéristiques représentant des informations d'identification reconnaissables par un utilisateur du premier dispositif terminal en fonction des informations de dispositif acquises uniques comprend :
après la recherche (205) d'une relation correspondante entre le port prédéterminé et les informations de caractéristiques de façon à déterminer les informations de caractéristiques correspondant aux informations de dispositif acquises en fonction du port auquel le premier dispositif terminal accède, la distribution (206) d'informations de caractéristiques finales pour le premier dispositif terminal en fonction des informations de caractéristiques déterminées.

5. Le procédé selon la Revendication 1, où la détermination (103) d'informations de caractéristiques représentant des informations d'identification reconnaissables par un utilisateur du premier dispositif terminal en fonction des informations de dispositif uniques acquises comprend :
l'envoi (403) d'une demande d'acquisition au premier dispositif terminal en fonction des informations de dispositif acquises en vue de demander l'acquisition des informations de caractéristiques du premier dispositif terminal, la réception (404) d'une réponse à la demande envoyée à partir du premier dispositif terminal, la réponse à la demande contenant les informations de caractéristiques du premier dispositif terminal, ou
la recherche des informations de caractéristiques correspondant aux informations de dispositif à partir d'un côté réseau.

6. Le procédé selon la Revendication 1, où la production en sortie (104) des informations de caractéristiques comprend :
l'affichage (405) des informations de caractéristiques, ou
l'envoi (304) des informations de caractéristiques à un deuxième dispositif terminal.

7. Le procédé selon la Revendication 1, où les informations de dispositif comprennent : des informations d'adresse de commande d'accès au support (MAC) et/ou des informations d'utilisation de port.

8. Un dispositif d'acquisition d'informations de caractéristiques, **caractérisé en ce que** le dispositif comprend :
un module de réception (501) configuré de façon à recevoir une demande de connexion à un réseau envoyée à partir d'un premier dispositif terminal,
un module d'analyse (502) configuré de façon à analyser la demande de connexion à un réseau reçue de façon à acquérir des informations de dispositif uniques des premières informations de terminal,
un module de caractéristiques (503) configuré de façon à déterminer des informations de caractéristiques représentant des informations d'identification reconnaissables par un utilisateur du premier dispositif terminal en fonction des informations de dispositif uniques acquises, de façon à permettre à un utilisateur du dispositif de reconnaître le premier dispositif terminal et d'autoriser ou de refuser une connexion réseau du premier dispositif terminal au routeur en fonction des informations de caractéristiques acquises, et
un module de production en sortie (504) configuré de façon à produire en sortie les informations de caractéristiques, comprenant l'affichage des informations de caractéristiques de façon à notifier des utilisateurs qu'il existe une connexion réseau avec le premier dispositif terminal, ou l'envoi des informations de caractéristiques à d'autres dispositifs terminaux de façon à notifier d'autres dispositifs terminaux qu'il existe une connexion réseau avec le premier dispositif terminal,
où les informations de caractéristiques reconnaissables par un utilisateur comprennent : un ou plusieurs éléments parmi informations de nom d'utilisateur, informations de système d'exploitation, informations de marque, informations de type d'équipement, informations de fabricant, informations d'utilisation et informations de nom d'application.

9. Le dispositif selon la Revendication 8, où le module de caractéristiques (503) comprend :
une unité de connexion (601) configurée de façon à établir une connexion réseau avec le premier dispositif terminal en fonction des informations de dispositif uniques,
une unité de port (602) configurée de façon à déterminer un port auquel le premier dispositif terminal accède, et
une première unité de recherche (603) configurée de façon à rechercher une relation correspondante entre un port prédéterminé et les informations de caractéristiques de façon à déterminer les informations de caractéristiques reconnaissables par un utilisateur correspondant aux informations de dispositif uniques acquises en fonction du port auquel le premier dispositif terminal accède.

10. Le dispositif selon la Revendication 9, où le module de caractéristiques (503) comprend en outre :
une unité de distribution (608) configurée de façon à distribuer des informations de caractéristiques finales pour le premier dispositif terminal en fonction des informations de caractéristiques déterminées.

11. Le dispositif selon la Revendication 8, où le module de caractéristiques (503) comprend :
une deuxième unité de recherche (604) configurée de façon à rechercher une relation correspondante entre des informations de dispositif prédéterminées et les informations de caractéristiques de façon à déterminer les informations de caractéristiques reconnaissables par un utilisateur correspondant aux informations de dispositif uniques acquises en fonction des informations de dispositif acquises.

12. Le dispositif selon la Revendication 8, où le module de caractéristiques (503) comprend :
une unité d'envoi (605) configurée de façon à envoyer une demande d'acquisition au premier dispositif terminal en fonction des informations de dispositif uniques acquises en vue de demander l'acquisition des informations de caractéristiques reconnaissables par un utilisateur du premier dispositif terminal,
une unité de réception (606) configurée de façon à recevoir une réponse à la demande envoyée à partir du premier dispositif terminal, la réponse à la demande contenant les informations de caractéristiques du premier dispositif terminal, ou
le module de caractéristiques (503) comprend :
une unité de recherche (607) configurée de façon à rechercher les informations de caractéristiques correspondant aux informations de dispositif à partir d'un côté réseau.

13. Le dispositif selon la Revendication 8, où le module de production en sortie (504) comprend :
une unité d'affichage (901) configurée de façon à afficher les informations de caractéristiques, à notifier des utilisateurs qu'il existe une connexion réseau avec le premier dispositif terminal, ou
une unité d'envoi (902) configurée de façon à envoyer les informations de caractéristiques à un deuxième dispositif terminal, à notifier d'autres dispositifs terminaux qu'il existe une connexion réseau avec le premier dispositif terminal.

14. Un programme informatique, qui, lorsqu'il est exécuté sur un processeur, exécute le procédé selon l'une quelconque des Revendications 1 à 7.
